# EUROPÄISCHE PATENTSCHRIFT

(11) **EP 4 134 990 B1**
(45) Veröffentlichungstag und Bekanntmachung des Hinweises auf die Patenterteilung: **18.06.2025**
(21) Anmeldenummer: 22188782.1
(22) Anmeldetag: 04.08.2022
(51) Int. Cl.: H01F 5/00, F16K 27/00, F16K 31/06, H01F 7/06

(54) **MAGNETSPULE MIT KÜHLSTRUKTUR UND MAGNETVENTIL MIT DERARTIGER MAGNETSPULE**
MAGNETIC COIL WITH COOLING STRUCTURE AND SOLENOID VALVE USING THE SAME
BOBINE MAGNÉTIQUE POURVUE DE STRUCTURE DE REFROIDISSEMENT ET ÉLECTROVANNE DOTÉE D'UNE TELLE BOBINE MAGNÉTIQUE

(30) Priorität: 11.08.2021 DE 102021208742
(43) Veröffentlichungstag der Anmeldung: 15.02.2023
(73) Patentinhaber: Robert Bosch GmbH, 70442 Stuttgart (DE)
(72) Erfinder: Gellner, Thomas, 97854 Steinfeld (DE); Becker, Stephan, 63808 Haibach (DE)

(56) Entgegenhaltungen:
- CN-U- 208 090 045
- CN-U- 212 718 297
- DE-A1- 102007 048 461
- DE-A1- 102009 054 374
- DE-A1- 102019 004 597
- JP-A- S5 257 964
- US-A- 3 818 398
- US-A- 5 375 738

## Beschreibung

Die Erfindung betrifft eine Magnetspule gemäß dem Oberbegriff des Patentanspruchs 1 und ein Magnetventil mit einer derartigen Magnetspule.

Magnetspulen können dazu verwendet werden, elektrische Energie in magnetische Energie umzuwandeln. Dazu weisen Magnetspulen in ihrem Inneren einen Leitungsdraht auf, der in einer Vielzahl von übereinanderliegenden Windungen angeordnet ist. In dem Leitungsdraht wird durch die der Magnetspule zugeführte elektrische Energie ein Magnetfeld erzeugt, wodurch die Magnetspule erregt wird. Häufig umschließt der gewundene Leitungsdraht einen Eisenkern, der das im Leitungsdraht erzeugte Magnetfeld verstärkt. Mithilfe von dem somit erzeugten Magnetfeld können von der Magnetspule getrennt ausgebildete Komponenten angezogen und somit bewegt werden.

Diesen Mechanismus macht man sich unter anderem bei der Schaltung von Magnetventilen zu Nutze. Mithilfe einer Magnetspule kann dabei ein Magnetventil geschaltet / betätigt werden. Dazu wird ein elektrischer Anschluss einer Magnetspule mit einer Energiequelle verbunden. Mithilfe der von der Energiequelle zugeführten elektrischen Energie (üblicherweise in Form von einer 24V-Spannung) erzeugt die Magnetspule ein Magnetfeld und wandelt somit die elektrische Energie in magnetische Energie um. Ein im Magnetventil angeordneter Kolben wird von dem von der Magnetspule erzeugten Magnetfeld so bewegt (angezogen), dass ein Medieneingang und ein Medienausgang des Magnetventils miteinander in Verbindung gebracht werden. Auf diese Weise wird das Magnetventil geöffnet und ein Medium kann hindurchfließen. Wird der Magnetspule keine Energie mehr zugeführt, erzeugt die Magnetspule kein Magnetfeld mehr, sodass der Kolben nicht mehr von der Magnetspule angezogen wird und sich in seine Ausgangsstellung zurückbewegt. Dabei werden der Medieneingang und der Medienausgang des Magnetventils wieder voneinander separiert. In diesem Fall ist das Magnetventil im geschlossenen Zustand und es kann kein Medium durch das Magnetventil strömen.

Derartige Magnetventile, die durch eine Magnetspule geschaltet werden, können bspw. als Aktoren zum Antrieb eines Ventilkörpers einer Einspritzdüse dienen, wie u.a. in der DE 10 2007 000 358 A1 beschrieben.

Weitere Magnetspulen und Magnetventile werden unter anderem in der CN 208 090 045 U, der DE 10 2007 048 461 A1, der US 5 375 738 A, der JP S52-57 964 A, der US 3 818 398 A der CN 212 718 297 U oder der DE 10 2009 054 374 A1 erläutert.

Die DE 10 2019 004 597 A1 offenbart eine Magnetspule zum Schalten eines Magnetventils gemäß dem Oberbegriff der Ansprüche 1 und 2.

Es hat sich in der Praxis gezeigt, dass die durchschnittliche Lebensdauer einer herkömmlichen Magnetspule häufig im Vergleich zu ihrer maximal erreichbaren Lebensdauer verkürzt ist.

Wird das Magnetventil seltener oder kürzer geschaltet, wirkt sich dies positiv auf die Lebensdauer der Magnetspule aus. Demnach ist es in Bezug auf die Verlängerung der Lebensdauer der Magnetspule hilfreich, wenn der Energiebedarf des Magnetventils verringert wird.

Bspw. kann ein Verstärker mit Pulsweitenmodulation mit dem Magnetventil verbunden werden. Durch den Verstärker wird die Schaltzeit des Magnetventils deutlich verkürzt. Somit muss die Magnetspule weniger lang erregt werden. Dies senkt einerseits den Energiebedarf der Magnetspule bzw. des Magnetventils deutlich ab und andererseits kann dadurch die Lebensdauer der Magnetspule verlängert werden. Allerdings ist die derartige Methode zur Verlängerung der Lebensdauer der Magnetspule aufwendig und teuer.

Demgegenüber liegt der Erfindung die Aufgabe zu Grunde, eine Magnetspule bereitzustellen, deren Lebensdauer (weiter) verlängert werden kann. Insbesondere soll die Lebensdauer der Magnetspule auf einfache Weise und kostengünstig verlängert werden.

Diese Aufgabe wird hinsichtlich der Magnetspule gelöst durch die Merkmalskombination des Anspruchs 1 oder 2 und hinsichtlich des Magnetventils gelöst durch die Merkmalskombination des Anspruchs 5.

Weitere vorteilhafte Ausgestaltungen der Erfindung sind in den abhängigen Ansprüchen beschrieben.

Die beanspruchte Magnetspule ist zur Betätigung / Schaltung / zur Änderung einer Ventilstellung von einem Magnetventil ausgelegt. Die Magnetspule weist eine im Wesentlichen zylinderförmige Spulen-Außenfläche auf. Die Außenfläche der Magnetspule weist eine die Außenfläche vergrößernde Kühlstruktur auf.

Es hat sich nämlich in der Praxis herausgestellt, dass sich die erregte Magnetspule aufgrund der Energiezufuhr mit elektrischer Energie erwärmt und das Erwärmen der Magnetspule einen negativen Einfluss auf deren Lebensdauer hat. Indem die Spulen-Außenfläche eine Kühlstruktur aufweist, kann die von der Magnetspule erzeugte Wärme einfach und unkompliziert an die Umgebung abgeführt werden. Somit wird der Erwärmungseffekt der Magnetspule mit einer Kühlstruktur an ihrer Außenfläche deutlich verringert gegenüber einer Magnetspule ohne Kühlstruktur. Somit kann die Lebensdauer der Magnetspule mit einer Kühlstruktur an ihrer Außenfläche im Vergleich zu derjenigen herkömmlicher Magnetspulen deutlich verlängert werden.

In einer bevorzugten Ausführungsform ist die Kühlstruktur als separat von der Außenfläche der Magnetspule ausgebildeter, passiver Kühlkörper mit Kühlrippen vorgesehen.

Ein passiver Kühlkörper mit Kühlrippen ist einfach und günstig zu fertigen. Der passive Kühlkörper vergrößert in dem Zustand, in dem er an die Magnetspule angebracht ist, deren Oberfläche und leitet die von der Magnetspule erzeugte Wärme über seine Kühlrippen an die Umgebung ab. Dadurch, dass der Kühlkörper separat von der Magnetspule vorgesehen ist, kann er je nach Bedarf an der Magnetspule angeordnet werden oder auch von dieser entfernt werden, bspw. wenn die Umgebung der Magnetspule nicht genügend Platz für den Kühlkörper bietet. Der Kühlkörper kann außerdem leicht ausgetauscht werden.

Die Erfindung sieht vor, dass der passive Kühlkörper eine Hohlzylinderform aufweist und die an der Kühlkörperaußenfläche angeordneten Kühlrippen sich in Kühlkörper-Umfangsrichtung, insbesondere parallel zueinander, erstrecken und in Kühlkörper-Längsrichtung voneinander beabstandet sind, insbesondere immer mit demselben Abstand, und von zumindest einem Längsschlitz, insbesondere von zwei diametral gegenüberliegenden Längsschlitzen, unterbrochen sind.

Erfindungsgemäß ist dabei ein erster Längsschlitz in Radialrichtung durchgehend vorgesehen, sodass die Kühlkörper-Wandfläche an dieser Stelle in Längsrichtung durchgängig unterbrochen ist. Ein dem ersten Längsschlitz diametral gegenüberliegender zweiter Längsschlitz ist in Radialrichtung nicht durchgehend vorgesehen, sondern ist als eine sich in Kühlkörperlängsrichtung, insbesondere über die gesamte Kühlkörperlänge, erstreckende Einkerbung an der Kühlkörperaußenwand vorgesehen und dient als Sollbiegestelle. Beim Anordnen des hohlzylinderförmigen Kühlkörpers an der Magnetspule wird der erste Längsschlitz aufgeweitet und der Kühlkörper wird an der Sollbiegestelle, die durch den zweiten Längsschlitz definiert ist, aufgebogen. Wenn der Kühlkörper an der Magnetspule angeordnet ist, nimmt der Kühlkörper wieder seine hohlzylinderförmige Ursprungsform an.

Dabei ist es wünschenswert, wenn die Kühlrippen über die gesamte Höhe / Länge des hohlzylinderförmigen Kühlkörpers verteilt sind. Durch die derartige Anordnung der Kühlrippen am passiven Kühlkörper kann die Oberfläche zur Abführung von der Magnetspule erzeugten Wärme optimal vergrößert werden.

Optimalerweise entspricht die Höhe / Länge des hohlzylinderförmigen Kühlkörpers (in etwa) der Höhe/ Länge der zylinderförmigen Magnetspule. Somit kann die gesamte Außenfläche der Magnetspule mit Kühlrippen bedeckt sein, sodass die Wärmeleitung über diese Kühlrippen optimal ist.

Weiterhin ist es vorteilhaft, wenn die Innenabmessung des hohlzylinderförmigen passiven Kühlkörpers kleiner als eine (in einem Untermaß zu einer) Außenabmessung der Magnetspule ist, sodass der passive Kühlkörper beim Anordnen an der Spulen-Außenfläche auf diese presspassbar ist und sich dabei der zumindest eine (der erste) Längsschlitz verbreitert.

Das heißt, dass die Innenabmessung, insbesondere der Innendurchmesser des hohlzylinderförmigen Kühlkörpers, zumindest geringfügig kleiner ist als die Außenabmessung, insbesondere der Außendurchmesser, der zylinderförmigen Magnetspule. Weiterhin ist es durch den zumindest einen Längsschlitz (sowie alternativ oder zusätzlich dazu aufgrund der Materialelastizität des hohlzylinderförmigen Kühlkörpers) möglich, den Kühlkörper zum Anordnen an der Magnetspule reversibel aufzudehnen. Ist der Kühlkörper an der Magnetspule angeordnet, wirkt die dem Kühlkörpermaterial innenwohnende Rückstellkraft so, dass der Kühlkörper die Magnetspule "umgreift" und somit fest an dieser angeordnet ist. Aufgrund dieser Merkmale kann der Kühlkörper einfach und sicher an der Magnetspule angeordnet werden.

In einer alternativen, Ausführungsform weist der passive Kühlkörper eine (Halb- )Kreisbogenform auf und die an der Kühlkörperaußenfläche angeordneten Kühlrippen erstrecken sich in Kühlkörper-Längsrichtung und sind in Kühlkörper-Umfangsrichtung voneinander beabstandet, insbesondere immer mit demselben Abstand. Dabei sind die Kühlrippen vorteilhafterweise zumindest über einen Teil des Kühlkörperumfangs verteilt.

Optimalerweise erstrecken sich die Kühlrippen über die gesamte Höhe / Länge des kreisbogenförmigen Kühlkörpers, sind jedoch nur über einen Teil des Kühlkörperumfangs verteilt. Wenn dieser passive Kühlkörper an der Magnetspule angeordnet ist, können die Kühlrippen aufgrund ihrer Anordnung besonders gut die Wärme von der Magnetspule an ihre Umgebung ableiten.

Optimalerweise ist dabei die Höhe / Länge des kreisbogenförmigen Kühlkörpers geringer als die Höhe / Länge der zylinderförmigen Magnetspule. Damit bedeckt der passive Kühlkörper nur einen Teil der Spulen-Außenfläche. Derartige kreisbogenförmige Kühlkörper können bei bestimmten Anwendungen für die Kühlung der Magnetspule ausreichend sein und sind günstiger und nehmen weniger Platz ein, als bspw. der passive hohlzylinderförmige Kühlkörper, der die gesamte Spulen-Außenfläche bedeckt.

Es kann bei dem kreisbogenförmigen passiven Kühlkörper vorteilhaft sein, wenn er in seinen Endbereichen in Umfangsrichtung keine Kühlrippen aufweist. In diesem Fall können diese Endbereiche einfacher gegriffen und leicht an der Magnetspule angeordnet werden.

Außerdem ist erfindungsgemäß die Innenabmessung des (halb-) kreisbogenförmigen passiven Kühlkörpers kleiner als eine (in einem Untermaß zu einer) Außenabmessung der Magnetspule, sodass der passive Kühlkörper beim Anordnen an der Spulen-Außenfläche auf diese presspassbar ist.

Das heißt, dass die Innenabmessung, insbesondere der Innenradius des (halb- )kreisbogenförmigen Kühlkörpers, zumindest geringfügig kleiner ist als die Außenabmessung, insbesondere der Außenradius, der zylinderförmigen Magnetspule. Aufgrund der Materialelastizität des (halb-)kreisbogenförmigen Kühlkörpers kann der Kühlkörper zum Anordnen an der Magnetspule reversibel aufgedehnt werden. Ist der Kühlkörper an der Magnetspule angeordnet, wirkt die dem Kühlkörpermaterial innenwohnende Rückstellkraft so, dass der Kühlkörper die Magnetspule "umgreift" und somit fest an dieser angeordnet ist. Aufgrund dieser Merkmale kann der Kühlkörper einfach und sicher an der Magnetspule angeordnet werden.

Insbesondere sind der die gesamte Spulen-Außenfläche bedeckende hohlzylinderförmige Kühlkörper als auch der nur einen Teil der Spulen-Außenfläche bedeckende kreisbogenförmige Kühlkörper aus Metall gefertigt.

Eine weiteres Beispiel sieht vor, dass die Kühlstruktur als separat von der Außenfläche der Magnetspule aktiv belüfteter (aktiv kühlender), extern energieversorgter Kühlkörper ausgebildet ist.

Ist der Kühlkörper, der an der Magnetspule angeordnet ist, ein aktiv belüfteter (nachfolgend auch einfach als aktiver Kühlkörper bezeichnet), kann dieser im Vergleich zu einem passiven Kühlkörper mehr Wärme von der Magnetspule an die Umgebung abführen. Die Anordnung eines aktiven Kühlkörpers an der Magnetspule ist besonders dann sinnvoll, wenn eine starke Erwärmung der Magnetspule zu befürchten ist.

Es ist weiterhin vorstellbar, dass der aktiv belüftete, extern energieversorgte Kühlkörper einen Lüfter aufweist, der mit Energie aus einer Energiequelle versorgt wird, die zumindest separat von der Magnetspule ausgebildet ist.

Wenn der aktive Kühlkörper einen Lüfter aufweist, kann der aktive Kühlkörper besonders effektiv die Magnetspule kühlen.

In einem besonders bevorzugten Beispiel ist die Kühlstruktur als separat von der Außenfläche der Magnetspule aktiv belüfteter, energieselbstversorgender Kühlkörper ausgebildet.

Energieselbstversorgend bedeutet hier, dass der an der Magnetspule angeordnete aktive Kühlkörper seine Energie von der Magnetspule erhält.

Dabei ist es bevorzugt, wenn der aktiv belüftete, energieselbstversorgende Kühlkörper einen Lüfter aufweist, der mit einer Verlustenergie, insbesondere in Form von (Ab-)Wärme, aus der Magnetspule versorgt wird. Somit kann die Wärmeenergie aus der Magnetspule zum Antrieb des Lüfters des aktiven Kühlkörpers genutzt werden. Ein derartiger selbstversorgender aktiver Kühlkörper ist also extrem energieeffizient und es ist keine Energiezufuhr aus einer externen Energiequelle nötig.

Bevorzugterweise wird dabei der aktiv belüftete, energieselbstversorgende Kühlkörper (insbesondere dessen Lüfter) mit einem speisenden Signal aus der Magnetspule versorgt. D.h. das Magnetventil bzw. die Magnetspule und der aktiv belüftete, energieselbstversorgende Kühlkörper (bzw. dessen Lüfter) schalten sich gleichzeitig über ein Ansteuersignal ein, über das das Magnetventil in einen aktiven / schaltenden Zustand versetzt wird.

Dabei ist es vorteilhaft, wenn zwischen der Magnetspule und dem Kühlkörper, insbesondere zwischen Magnetspule und Lüfter, ein Thermoelement oder ein thermoelektrischer Generator angeordnet ist, das / der die Verlustenergie aus der Magnetspule in eine Energieform, insbesondere in eine elektrische Spannung, umwandelt, die dem Lüfter des Kühlkörpers zugeführt wird.

Mithilfe von dem Thermoelement oder dem thermoelektrischen Generator kann also aus der Abwärme der Magnetspule eine elektrische Energie (Spannung) erzeugt werden, die dann dem aktiven, energieselbstversorgenden Kühlkörper zum Antrieb von dessen Lüfter zugeführt wird.

Grundsätzlich ist es denkbar, dass der aktiv belüftete (extern energieversorgte oder der energieselbstversorgende) Kühlkörper, insbesondere dessen Lüfter, nur dann aktiv ist (der Lüfter sich dreht), wenn das Magnetventil bzw. die Magnetspule aktiv ist. Allerdings ist es genauso möglich, dass der aktiv belüftete (extern energieversorgte oder der energieselbstversorgende) Kühlkörper zusätzlich dazu auch dann kühlt, wenn das Magnetventil bzw. die Magnetspule inaktiv ist. Es bestehen also die Möglichkeiten, dass der aktiv belüftete Kühlkörper nur dann kühlt, wenn das Magnetventil aktiv ist, und dass der aktiv belüftete Kühlkörper unabhängig vom Aktivitätszustand des Magnetventils (durchgängig) kühlt.

Eine weitere Ausführungsform sieht vor, dass die Außenfläche der Magnetspule selbst zumindest teilweise, insbesondere vollständig, als Kühlstruktur in Kühlrippenform ausgebildet ist.

Dies hat den Vorteil, dass die Kühlstruktur von Anfang an in die Magnetspule integriert ist und somit nicht erst in einem zusätzlichen Montageschritt auf die Magnetspule aufgesetzt werden muss / an dieser angeordnet werden muss.

Vorteilhafterweise ist dabei die Magnetspule als Hohlzylinder ausgebildet, der an seiner Mantelaußenfläche, insbesondere auf der gesamten Mantelaußenfläche, eine Vielzahl an in Hohlzylinderlängsrichtung, insbesondere parallel zueinander, verlaufenden und von der Mantelaußenfläche nach außen ragenden Kühlrippen integral aufweist. Dabei sind die Kühlrippen in Umfangsrichtung voneinander beabstandet, insbesondere immer mit demselben Abstand zueinander.

Die derartige Ausbildung der Außenfläche der Magnetspule ist im Hinblick auf eine Wärmeabführung sehr vorteilhaft.

Alternativ dazu ist denkbar, dass die Kühlrippen, die ein Teil der (integral mit der) Außenfläche der Magnetspule sind, in Umfangsrichtung der im Wesentlichen zylinderförmigen Magnetspule verlaufen und in deren Längsrichtung voneinander beabstandet sind.

Das erfindungsgemäße Magnetventil weist eine zuvor beschriebene Magnetspule auf. Weiterhin weist das Magnetventil zumindest einen Ventilkörper, einen Ventilsitz und ein Schließelement auf. Die Magnetspule bringt das Schließelement in Kontakt mit dem Ventilsitz und beendet einen Kontakt zwischen dem Schließelement und dem Ventilsitz, um das Magnetventil zumindest zwischen einer geschlossenen und einer geöffneten Position zu betätigen.

Dadurch, dass die Magnetspule an ihrer Außenfläche eine diese vergrößernde Kühlstruktur aufweist, wird zumindest der Großteil der von der Magnetspule erzeugten (Ab-)Wärme an die Umgebung abgeführt und die Magnetspule heizt sich kaum auf. Somit erhöht sich die Lebensdauer dieser Magnetspule im Vergleich zu einer ohne Kühlstruktur und die erfindungsgemäße Magnetspule kann das erfindungsgemäße Magnetventil zuverlässig schalten.

Mehrere Ausführungsbeispiele einer erfindungsgemäßen Magnetspule und eines Magnetventils mit einer derartigen Magnetspule sind in den Figuren dargestellt.

Es zeigen:
Fig. 1 eine Perspektivdarstellung einer Magnetspule;
Fig. 2 eine Draufsicht auf eine Grundfläche der Magnetspule;
Fig. 3 eine Perspektivdarstellung eines passiven Kühlkörpers gemäß einem ersten Ausführungsbeispiel;
Fig. 4 eine Perspektivdarstellung eines passiven Kühlkörpers gemäß einem zweiten Ausführungsbeispiel;
Fig. 5 eine Perspektivdarstellung eines aktiv belüfteten Kühlkörpers gemäß einem dritten Ausführungsbeispiel;
Fig. 6 eine Draufsicht von einem Wärmeumwandlungselement, das zwischen einer Magnetspule und dem Kühlkörper gemäß dem dritten Ausführungsbeispiel angeordnet ist;
Fig. 7 eine Perspektivdarstellung einer Magnetspule, deren Außenfläche als Kühlstruktur ausgebildet ist; und
Fig. 8 eine Perspektivdarstellung eines Magnetventils, welches mit zwei Magnetspulen verbunden ist.

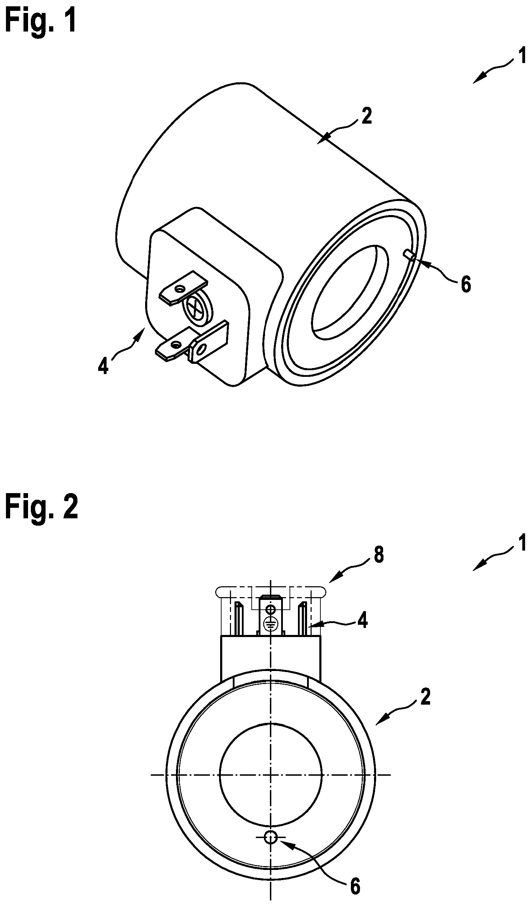

Fig. 1 ist eine Perspektivdarstellung einer Magnetspule 1. Die Magnetspule 1 ist hier als ein Hohlzylinder ausgebildet. Die Magnetspule 1 hat eine Außenfläche 2, an der ein diese Außenfläche 2 vergrößernder Kühlkörper angebracht werden kann oder die selbst als ihre Oberfläche vergrößernde Kühlstruktur ausgebildet sein kann. Von der Außenfläche 2 ragt ein elektrischer Anschluss 4 hervor. Über den elektrischen Anschluss 4 kann die Magnetspule 1 mit einer (elektrischen) Energiequelle verbunden werden, die die Magnetspule 1 erregen kann. An der einen Grundfläche der hohlzylinderförmigen Magnetspule 1, welche näher an dem elektrischen Anschluss 4 ist, ist ein Zapfen / Dorn 6 ausgebildet. Über den Dorn 6 kann die Magnetspule 1 mit einem Magnetventil verbunden werden. Die Magnetspule 1 ist in Fig. 1 ohne Kühlstruktur dargestellt.

Fig. 2 ist eine Draufsicht auf die Grundfläche der Magnetspule 1, die den Zapfen / Dorn 6 aufweist. Der elektrische Anschluss 4 ist mit einer Schutzkappe 8 abgedeckt, die eine Beschädigung / Deformierung des elektrischen Anschlusses 4 verhindern soll. Die Schutzkappe 8 wird entfernt, bevor der elektrische Anschluss 4 mit einer Energiequelle verbunden wird.

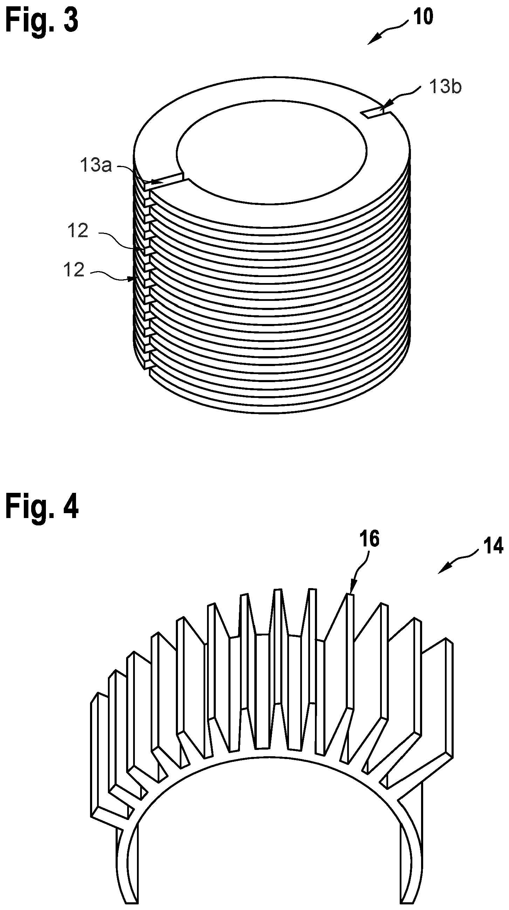

Fig. 3 ist eine Perspektivdarstellung eines passiven Kühlkörpers 10 nach einem ersten Ausführungsbeispiel. Dieser Kühlkörper 10 ist als Hohlzylinder ausgebildet, dessen Innendurchmesser so bemessen ist, dass er über die Magnetspule 1 stülpbar ist und auf diese aufgeklemmt werden kann. Somit liegt zwischen dem Kühlkörper 10 und der Magnetspule 1 eine kraftschlüssige Verbindung vor.

Der Kühlkörper 10 ist hierbei separat von der Magnetspule 1 ausgebildet. Der Kühlkörper 10 ist als passive Kühlstruktur ausgebildet und weist eine Vielzahl von Kühlrippen 12 auf. Die Kühlrippen 12 sind als Teil der Außenfläche des Kühlkörpers 10 ausgebildet und verlaufen parallel zueinander in dessen Umfangsrichtung. Über die gesamte Höhe des hohlzylinderförmigen Kühlkörpers 10 sind die Kühlrippen 12 in Umfangsrichtung mit einem Abstand zueinander angeordnet. Zwei diametral gegenüberliegende erste und zweite Längsschlitze 13a und 13b, die sich über die gesamte Höhe des Kühlkörpers 10 erstrecken, unterbrechen die Kühlrippen 12. Dabei ist der erste Längsschlitz 13a in Radialrichtung durchgängig ausgebildet, sodass er die Kühlkörperwand durchbricht. Der zweite Längsschlitz 13b ist in Radialrichtung als Einkerbung der Kühlkörperaußenwand vorgesehen und definiert eine Sollbiegestelle des Kühlkörpers 10. Der erste Längsschlitz 13 verbreitert sich beim Anordnen des Kühlkörpers 10 an der Magnetspule 1 und der Kühlkörper 10 biegt sich an der Sollbiegestelle radiusvergrößernd auf, um das Anordnen vom Kühlkörper 10 an der Magnetspule 1 zu erleichtern. Zusätzlich dazu dienen der erste und der zweite Längsschlitz 13a, 13b der Materialersparnis am Kühlkörper 10 und machen den Kühlkörper 10 leichter.

Ist der Kühlkörper 10 um die Magnetspule 1 herum angeordnet und wird die Magnetspule 1 warm, wird die Wärme über die Kühlrippen 12 nach außen geleitet und an die Umgebung abgegeben. Somit wird die Magnetspule 1 mithilfe des Kühlkörpers 10 passiv durch Konduktion gekühlt. Vorteilhaft ist es, wenn der Kühlkörper 10 eine Aussparung (nicht dargestellt) aufweist, die so dimensioniert ist, dass sie den elektrischen Anschluss 4 der Magnetspule 1 zumindest teilweise umgibt, wenn der Kühlkörper 10 an der Außenfläche 2 der Magnetspule 1 angeordnet ist. Vorteilhafterweise entspricht die Höhe des Kühlkörpers 10 der Höhe der Magnetspule 1.

Fig. 4 ist eine Perspektivdarstellung eines passiven Kühlkörpers 14 nach einem zweiten Ausführungsbeispiel. Dieser Kühlkörper 14 ist als (extrudierte) Kreisbogenform ausgebildet, wobei der Radius des Kreisbogens so bemessen ist, dass der Kühlkörper 14 an der Magnetspule 10 angeordnet werden kann, insbesondere auf diese geklemmt werden kann. Von der Außenfläche des Kühlkörpers 14 ragt eine Vielzahl von Kühlrippen 16 nach außen, die sich über die gesamte Höhe des Kühlkörpers 14 in dessen Höhenrichtung erstrecken. Die Kühlrippen 16 sind in eine Umfangsrichtung um einen vorbestimmten, wahlweise immer um denselben, Abstand voneinander entfernt und über den Umfang der Kühlkörpers 14 verteilt. Die Kühlrippen 16 sind dabei allerdings nur an einem Teil der Außenumfangsfläche des Kühlkörpers 14 angeordnet und nicht über dessen gesamte Außenumfangsfläche verteilt. Die Kühlrippen 16 haben bevorzugterweise alle dieselben Abmessungen. Durch seine Kühlrippen 16 ist der Kühlkörper 14 als passive Kühlstruktur ausgebildet und leitet im auf die Magnetspule 1 aufgesetzten Zustand Wärme von der Magnetspule 1 nach außen an die Umgebung ab. Der Kühlkörper 14 ist so dimensioniert, dass er nur einen Teil der Außenfläche 2 der Magnetspule 1 abdeckt. Insbesondere ist die Höhe des Kühlkörpers 14 geringer als die Höhe der Magnetspule 1.

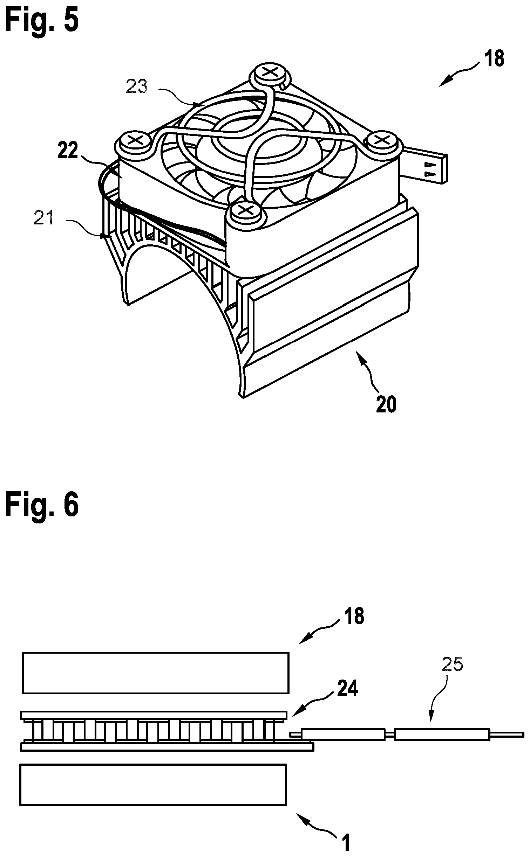

Weiterhin zeigt Fig. 5 eine Perspektivdarstellung eines aktiv belüfteten Kühlkörpers 18 nach einem dritten Ausführungsbeispiel. Der Kühlkörper 18 weist dabei eine untere und eine obere Komponente 20, 22 auf. Die untere Komponente 20 ist so ähnlich aufgebaut wie der Kühlkörper 14 nach dem zweiten Ausführungsbeispiel. Allerdings weisen hier die Kühlrippen 21 der unteren Komponente 20 voneinander verschiedene Tiefen auf und sind so ausgebildet, dass sie eine Art ebenes Plateau bilden. Auf diesem Plateau ist die oberen Komponente 22 angeordnet, die als Lüfter ausgebildet ist. Die untere und die obere Komponente 20, 22 können über eine Klemmverbindung, also kraftschlüssig, miteinander verbunden werden. Alternativ dazu können die untere und die obere Komponente aber auch formschlüssig oder stoffschlüssig miteinander verbunden werden. Der Lüfter 22 wird mit Energie betrieben und weist ein hier nicht dargestelltes Propellerelement auf. Wird dem Lüfter 22 Energie zugeführt, wird das Propellerelement in Bewegung, insbesondere in eine Rotationsbewegung, gebracht und erzeugt dabei eine Luftbewegung.

Der Kühlkörper 18 wird über die untere Komponente 20 an der Außenfläche 2 der Magnetspule 1 angeordnet. Dabei ist der Innenradius der unteren Komponente 20 so bemessen, dass die untere Komponente 20 an der Außenfläche 2 der Magnetspule 1 angeordnet werden kann, insbesondere auf diese geklemmt werden kann (nach demselben Prinzip, wie der passive, kreisbogenförmige Kühlkörper 14). Zwischen dem Kühlkörper 18 und der Magnetspule 1 liegt somit eine kraftschlüssige Verbindung vor. Ist der Kühlkörper 18 an der Außenfläche 2 der Magnetspule 1 angeordnet und wird die Magnetspule 1 bzw. deren Außenfläche 2 warm, leitet die untere Komponente 20 die Wärme von der Magnetspule 1 über die Kühlrippen 21 an den Lüfter 22. Das Propellerelement im Lüfter 22 bewegt sich (dreht sich) und verteilt somit die warme Luft an die Umgebung. Damit wirkt der Kühlkörper 18 als aktiv belüfteter Kühlkörper, der die von der Magnetspule 1 erzeugte Wärme durch Konvektion ableiten kann.

Der Lüfter 22 kann außerdem eine Rahmenstruktur 23 aufweisen. Diese wird über Befestigungsmittel, z.B. Schrauben, formschlüssig (über Befestigungsmittel) mit dem Lüfter 22 verbunden. Die Rahmenstruktur 23 erhöht die Stabilität des Lüfters 22 und schützt diesen vor Stößen etc.

Der Kühlkörper 18 weist einen hier nicht dargestellten elektrischen Anschluss auf, über den der Lüfter 22 Energie zugeführt bekommt. Dabei kann der Lüfter 22 in einer Ausführungsform die Energie aus einer externen Energiequelle zugeführt bekommen. In einer anderen Ausführungsform kann ein Wärmeumwandlungselement die (Ab-)Wärme aus der Magnetspule 1 in eine für den Lüfter 22 nutzbare, insbesondere elektrische, Energie umwandeln. In diesem Fall erhält der Lüfter 22 über seinen elektrischen Anschluss die für die Bewegung seines Propellerelementes erforderliche Energie direkt aus der Magnetspule 1. Ist ein Wärmeumwandlungselement an der Magnetspule 1 und/oder dem Kühlkörper 18 vorgesehen, ist die erfindungsgemäße Kühlstruktur demnach als separat von der Außenfläche 2 der Magnetspule 1 aktiv belüfteter, energieselbstversorgender Kühlkörper 18 ausgebildet.

Fig. 6 ist eine Draufsicht auf ein Wärmeumwandlungselement, das hier als ein Thermoelement 24 ausgebildet ist. Das Thermoelement 24 weist dabei ein Metall auf. Allerdings kann das Wärmeumwandlungselement alternativ dazu als thermoelektrischer Generator ausgebildet sein, der anstatt von einem Metall Halbleitermaterialien (ähnlich wie ein Peltier-Element) aufweist.

Das Thermoelement 24 ist zwischen der Magnetspule 1 und dem Kühlkörper 18 gemäß dem dritten Ausführungsbeispiel angeordnet. Wie bereits zuvor beschrieben, erhält das Thermoelement 24 die Wärme(-energie) von der Magnetspule 1 und wandelt diese in elektrische Energie um. Dabei weist das Thermoelement 24 einen elektrischen Anschluss 25 auf. Dieser wird mit dem elektrischen Anschluss des Kühlkörpers 18 verbunden, sodass der Kühlkörper 18 die vom Thermoelement 24 umgewandelte elektrische Energie erhalten kann. Mit dieser elektrischen Energie kann dann der Lüfter 22 betrieben werden. In einer vorteilhaften Ausführungsform (hier nicht dargestellt) ist das Thermoelement 24 auf dem Plateau zwischen der unteren Komponente 20 und dem Lüfter 22 angeordnet.

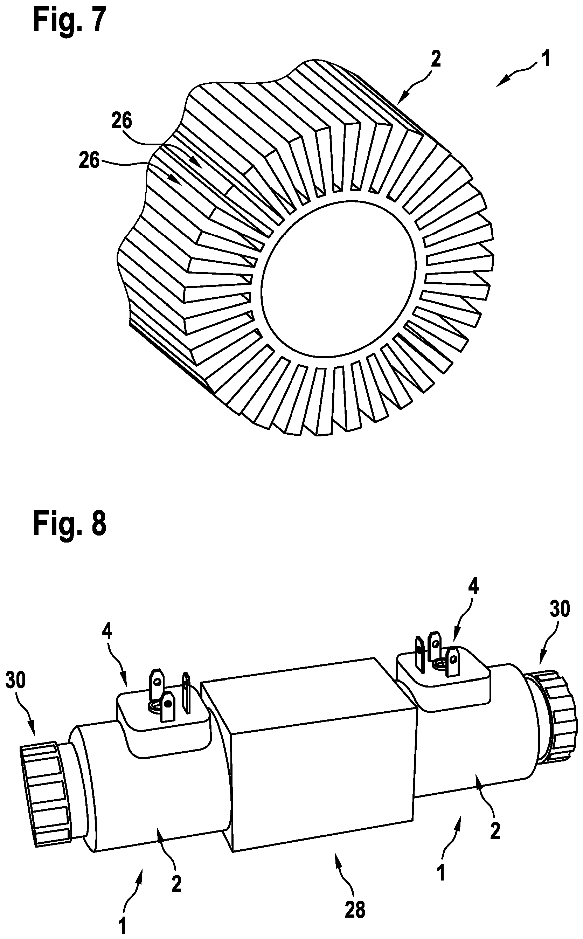

Fig. 7 ist eine Perspektivdarstellung einer Magnetspule 1, deren Außenfläche 2 selbst als Kühlstruktur ausgebildet ist. Dabei ist die Außenfläche 2 als eine Vielzahl an Kühlrippen 26 ausgebildet, die sich entlang der Höhenrichtung der Magnetspule 1 über deren gesamte Höhe erstrecken. Die Kühlrippen 26 sind in Umfangsrichtung mit, insbesondere denselben, Abständen zueinander angeordnet und über den gesamten Außenumfang der Magnetspule 1 gleichmäßig verteilt.

Fig. 8 ist eine Perspektivdarstellung eines Magnetventils 28, welches mit zwei Magnetspulen 1 verbunden ist. Das Magnetventil 28 ist als Quader ausgebildet und weist an seinen beiden kurzen Stirnseiten jeweils eine Magnetspule 1 auf. Die Magnetspulen 1 weisen in dieser Darstellung 1 zwar keine Kühlstruktur auf. Allerdings ist denkbar, dass einer der Kühlkörper 10, 14, bzw. 18 gemäß dem ersten, zweiten bzw. dritten Ausführungsbeispiel mit der Magnetspule 1 verbunden werden kann. Alternativ dazu könnte die Außenfläche 2 der Magnetspulen 1 selbst als passive Kühlstruktur ausgebildet sein, wie es in Fig. 7 dargestellt ist.

Die elektrischen Anschlüsse 4 der beiden Magnetspulen 1 sind hier nicht als mit einer Energiequelle verbunden dargestellt. Soll jedoch das Magnetventil betrieben / betätigt / geschaltet werden, wird der elektrische Anschluss 4 jeder Magnetspule 1 mit einer Energiequelle verbunden. Durch die von der Energiequelle zugeführte elektrische Energie erzeugt die Magnetspule 1 ein Magnetfeld / wird erregt und wandelt dabei die elektrische Energie in magnetische Energie um. Ein im Magnetventil 28 angeordneter Kolben (nicht dargestellt) wird von dem von der Magnetspule erzeugten Magnetfeld so bewegt, dass ein Medieneingang und ein Medienausgang (beide nicht dargestellt) des Magnetventils 28 miteinander in Verbindung gebracht werden. In diesem Fall ist das Magnetventil 28 geöffnet und ein Medium kann hindurchfließen. Wird der Magnetspule 1 keine Energie mehr zugeführt, erzeugt die Magnetspule 1 kein Magnetfeld mehr, sodass sich der Kolben in seine Ausgangsstellung zurückbewegt und dabei Medieneingang und Medienausgang des Magnetventils 28 wieder voneinander separiert. In diesem Fall ist das Magnetventil 28 im geschlossenen Zustand und es kann kein Medium durch das Magnetventil 28 strömen.

Die Magnetspulen 1 können über den Zapfen / Dorn 6 in eine entsprechende am Magnetventil 28 vorgesehene Vertiefung (nicht dargestellt) eingeführt und somit mit diesem verbunden werden. In Fig. 8 weisen die Magnetspulen 1 außerdem jeweils eine Hilfsbetätigungsvorrichtung 30 auf. Die Hilfsbetätigungsvorrichtung 30 ist dabei jeweils am freien Ende der Magnetspule 1 vorgesehen. Die Hilfsbetätigungsvorrichtung 30 gestattet das Schalten des Magnetventils 28 auch dann, wenn die Magnetspule 1 nicht erregt ist / kein Magnetfeld erzeugt. Über die Hilfsbetätigungsvorrichtung 30 kann das Magnetventil 28 also manuell direkt geschaltet werden.

Bei einer alternativen Ausführungsform ist das Magnetventil 28 mit nur einer Magnetspule 1 verbunden.

### Bezugszeichenliste:

- 1: Magnetspule
- 2: Außenfläche (der Magnetspule)
- 4: elektrischer Anschluss (der Magnetspule)
- 6: Zapfen / Dorn
- 8: Schutzkappe
- 10: Kühlkörper
- 12: Kühlrippen
- 13a: erster Längsschlitz
- 13b: zweiter Längsschlitz
- 14: Kühlkörper
- 16: Kühlrippen
- 18: Kühlkörper
- 20: untere Komponente
- 21: Kühlrippen
- 22: obere Komponente / Lüfter
- 23: Rahmenstruktur
- 24: Thermoelement / thermoelektrischer Generator
- 25: elektrischer Anschluss (des Thermoelementes / des thermoelektrischen Generators)
- 26: Kühlrippen
- 28: Magnetventil
- 30: Hilfsbetätigungsvorrichtung

## Patentansprüche

1. Magnetspule (1) zum Schalten eines Magnetventils mit einer im Wesentlichen zylinderförmigen Spulen-Außenfläche (2), wobei die Magnetspule (1) an ihrer Außenfläche (2) eine die Außenfläche vergrößernde Kühlstruktur aufweist,
die Kühlstruktur als separat von der Außenfläche (2) der Magnetspule (1) ausgebildeter, passiver Kühlkörper (10) mit Kühlrippen (12) vorgesehen ist,
der passive Kühlkörper (10) eine Hohlzylinderform aufweist und die an der Kühlkörperaußenfläche angeordneten Kühlrippen (12) sich in die Kühlkörper-Umfangsrichtung erstrecken und in Kühlkörper-Längsrichtung voneinander beabstandet sind und von zumindest einem Längsschlitz (13a), insbesondere von zwei diametral angeordneten Längsschlitzen (13a, 13b), unterbrochen sind, **dadurch gekennzeichnet, dass** die Innenabmessung des hohlzylinderförmigen, passiven Kühlkörpers (10) kleiner als eine Außenabmessung der Magnetspule (1) ist, sodass der passive Kühlkörper (10) beim Anordnen an der Spulen-Außenfläche (2) auf diese presspassbar ist und sich dabei der zumindest eine Längsschlitz (13a) verbreitert.

2. Magnetspule (1) zum Schalten eines Magnetventils mit einer im Wesentlichen zylinderförmigen Spulen-Außenfläche (2), wobei die Magnetspule (1) an ihrer Außenfläche (2) eine die Außenfläche vergrößernde Kühlstruktur aufweist,
die Kühlstruktur als separat von der Außenfläche (2) der Magnetspule (1) ausgebildeter, passiver Kühlkörper (10) mit Kühlrippen (16) vorgesehen ist, **dadurch gekennzeichnet, dass** der passive Kühlkörper (14) eine Kreisbogenform aufweist und die an der Kühlkörperaußenfläche angeordneten Kühlrippen (16) sich in Kühlkörper-Längsrichtung erstrecken und in Kühlkörper-Umfangsrichtung voneinander beabstandet sind, ,und dass die Innenabmessung des kreisbogenförmigen passiven Kühlkörpers (14) kleiner als eine Außenabmessung der Magnetspule (1) ist, sodass der passive Kühlkörper (14) beim Anordnen an der Spulen-Außenfläche (2) auf diese presspassbar ist.

3. Magnetspule (1) nach Anspruch 1 oder 2, **dadurch gekennzeichnet, dass** die Außenfläche (2) der Magnetspule (1) selbst zumindest teilweise, insbesondere vollständig, als Kühlstruktur in Kühlrippenform ausgebildet ist.

4. Magnetspule (1) nach Anspruch 3, **dadurch gekennzeichnet, dass** die Magnetspule (1) als Hohlzylinder ausgebildet ist, der an seiner Mantelaußenfläche (2), insbesondere auf der gesamten Mantelaußenfläche (2), eine Vielzahl an in Hohlzylinderlängsrichtung verlaufenden, in Hohlzylinderumfangsrichtung voneinander beabstandeten und von der Mantelaußenfläche (2) nach außen ragenden Kühlrippen (26) integral aufweist.

5. Magnetventil (28) mit zumindest einem Ventilkörper, einem Ventilsitz, einem Schließelement und einer Magnetspule (1) nach einem der vorhergehenden Ansprüche, welche das Schließelement in Kontakt mit dem Ventilsitz bringt und einen Kontakt zwischen dem Schließelement und dem Ventilsitz beendet, um das Magnetventil (28) zumindest zwischen einer geschlossenen und einer geöffneten Position zu betätigen.

## Claims

1. Magnetic coil (1) for switching a solenoid valve, having a substantially cylindrical coil outer surface (2), wherein the magnetic coil (1) on its outer surface (2) has a cooling structure which enlarges the outer surface,
the cooling structure is provided as a passive heat sink (10) which has cooling fins (12) and is formed separately from the outer surface (2) of the magnetic coil (1),
the passive heat sink (10) has a hollow cylindrical shape and the cooling fins (12) disposed on the outer surface of the heat sink extend in the circumferential direction of the heat sink and are mutually spaced apart in the longitudinal direction of the heat sink and are interrupted by at least one longitudinal slot (13a), in particular by two diametrically disposed longitudinal slots (13a, 13b), **characterized in that** the inner dimension of the hollow-cylindrical passive heat sink (10) is smaller than an outer dimension of the magnetic coil (1), so that the passive heat sink (10) during disposal on the coil outer surface (2) can be press-fitted onto the latter, and the at least one longitudinal slot (13a) widens in the process.

2. Magnetic coil (1) for switching a solenoid valve, having a substantially cylindrical coil outer surface (2), wherein the magnetic coil (1) on its outer surface (2) has a cooling structure which enlarges the outer surface,
the cooling structure is provided as a passive heat sink (10) which has cooling fins (16) and is formed separately from the outer surface (2) of the magnetic coil (1), **characterized in that** the passive heat sink (14) has an arcuate shape and the cooling fins (16) disposed on the outer surface of the heat sink extend in the longitudinal direction of the heat sink and are mutually spaced apart in the circumferential direction of the heat sink, and **in that** the inner dimension of the arcuate passive heat sink (14) is smaller than an outer dimension of the magnetic coil (1), so that the passive heat sink (14) during disposal on the coil outer surface (2) can be press-fitted onto the latter.

3. Magnetic coil (1) according to Claim 1 or 2, **characterized in that** the outer surface (2) of the magnetic coil (1) per se is designed at least partially, in particular completely, as a cooling structure in the form of cooling fins.

4. Magnetic coil (1) according to Claim 3, **characterized in that** the magnetic coil (1) is designed as a hollow cylinder, which has on its shell outer surface (2), in particular on the entire shell outer surface (2), a multiplicity of integral cooling fins (26) which extend in the longitudinal direction of the hollow cylinder and are mutually spaced apart in the circumferential direction of the hollow cylinder and protrude outwards from the shell outer surface (2).

5. Solenoid valve (28) having at least one valve body, a valve seat, a locking element and a magnetic coil (1) according to one of the preceding claims, the latter bringing the locking element into contact with the valve seat and terminating a contact between the locking element and the valve seat, so as to activate the solenoid valve (28) at least between a closed and an opened position.

## Revendications

1. Bobine magnétique (1) destinée à la commutation d'une électrovanne dotée d'une surface extérieure de bobine (2) sensiblement cylindrique, la bobine magnétique (1) présentant sur sa surface extérieure (2) une structure de refroidissement augmentant la surface extérieure,
la structure de refroidissement étant prévue sous forme d'un corps de refroidissement passif (10) doté d'ailettes de refroidissement (12), réalisé séparément de la surface extérieure (2) de la bobine magnétique (1),
le corps de refroidissement passif (10) présentant une forme cylindrique creuse et les ailettes de refroidissement (12) agencées sur la surface extérieure du corps de refroidissement s'étendant dans la direction circonférentielle du corps de refroidissement et étant espacées les unes des autres dans la direction longitudinale du corps de refroidissement et étant interrompues par au moins une fente longitudinale (13a), en particulier par deux fentes longitudinales (13a, 13b) disposées diamétralement, **caractérisée en ce que** la dimension intérieure du corps de refroidissement passif (10) cylindrique creux est inférieure à une dimension extérieure de la bobine magnétique (1), de sorte que le corps de refroidissement passif (10) peut être ajusté par ajustement serré sur la surface extérieure de la bobine (2) lors de son agencement sur celle-ci, ce qui conduit à un élargissement de l'au moins une fente longitudinale (13a).

2. Bobine magnétique (1) destinée à la commutation d'une électrovanne dotée d'une surface extérieure de bobine (2) sensiblement cylindrique, la bobine magnétique (1) présentant sur sa surface extérieure (2) une structure de refroidissement augmentant la surface extérieure,
la structure de refroidissement étant prévue sous forme d'un corps de refroidissement passif (10) doté d'ailettes de refroidissement (16), réalisé séparément de la surface extérieure (2) de la bobine magnétique (1), **caractérisée en ce que** le corps de refroidissement passif (14) présente une forme en arc de cercle et **en ce que** les ailettes de refroidissement (16) agencées sur la surface extérieure du corps de refroidissement s'étendent dans la direction longitudinale du corps de refroidissement et sont espacées les unes des autres dans la direction circonférentielle du corps de refroidissement, et **en ce que** la dimension intérieure du corps de refroidissement passif (14) en forme d'arc de cercle est inférieure à une dimension extérieure de la bobine magnétique (1), de sorte que le corps de refroidissement passif (14) peut être ajusté par ajustement serré sur la surface extérieure de la bobine (2) lors de son agencement sur celle-ci.

3. Bobine magnétique (1) selon la revendication 1 ou 2, **caractérisée en ce que** la surface extérieure (2) de la bobine magnétique (1) elle-même est réalisée au moins partiellement, en particulier complètement, sous la forme d'une structure de refroidissement en forme d'ailettes de refroidissement.

4. Bobine magnétique (1) selon la revendication 3, **caractérisée en ce que** la bobine magnétique (1) est réalisée sous la forme d'un cylindre creux qui présente intégralement sur sa surface extérieure d'enveloppe (2), en particulier sur toute la surface extérieure d'enveloppe (2), une pluralité d'ailettes de refroidissement (26) s'étendant dans la direction longitudinale du cylindre creux, espacées les unes des autres dans la direction circonférentielle du cylindre creux et faisant saillie vers l'extérieur à partir de la surface extérieure d'enveloppe (2).

5. Électrovanne (28) dotée d'au moins un corps de vanne, d'un siège de vanne, d'un élément de fermeture et d'une bobine magnétique (1) selon l'une quelconque des revendications précédentes, laquelle amène l'élément de fermeture au contact du siège de vanne et met fin à un contact entre l'élément de fermeture et le siège de vanne afin d'actionner l'électrovanne (28) au moins entre une position fermée et une position ouverte.
